# EUROPEAN PATENT APPLICATION

(11) **EP 2 189 187 A1**
(43) Date of publication of application: **26.05.2010**
(21) Application number: 09717425.4
(22) Date of filing: 27.02.2009
(51) Int. Cl.: A62C 3/00, A62C 3/07, A62C 3/16, A62C 35/02, A62C 37/40, B60L 3/00, H02H 5/04, H02M 7/48

(54) **ELECTRIC POWER EQUIPMENT, AND ELECTRONIC DEVICE AND POWER SUPPLY ELEMENT INSPECTION EQUIPMENT USING SAME**

(30) Priority: 04.03.2008 JP 2008052996
(71) Applicant: Panasonic Corporation, Kadoma-shi Osaka 571-8501 (JP)
(72) Inventor: HIRAKAWA, Yasushi, Chuo-ku, Osaka-shi, Osaka 540-6207 (JP); NISHINO, Hajime, Chuo-ku, Osaka-shi, Osaka 540-6207 (JP); IMASHIKU, Shoichi, Chuo-ku, Osaka-shi, Osaka 540-6207 (JP)
(74) Representative: Schwabe - Sandmair - Marx
(86) International application number: PCT/JP2009/000871
(87) International publication number: WO 2009/110200

(57) **Abstract**

The present invention has a configuration including a main body case, a plurality of power supply elements provided in the main body case, and a fire-extinguishing agent discharge space disposed facing the plurality of power supply elements. The fire-extinguishing agent discharge space includes fire-extinguishing agent spray space having a plurality of fire-extinguishing agent spray holes for spraying a fire-extinguishing agent toward the plurality of power supply elements, and a fire-extinguishing agent supply space coupled to the fire-extinguishing agent spray space via a plurality of fire-extinguishing supply holes. A fire-extinguishing agent tank is coupled to the fire-extinguishing agent supply space via a shutoff valve.

## Description

### TECHNICAL FIELD

The present invention relates to electric power equipment capable of responding to abnormal conditions of a power supply element, and an electronic device and power supply element inspection equipment using the electric power equipment.

### BACKGROUND ART

In electronic devices, for example, automobiles, electric vehicles in which a drive motor used as a power source is driven by electric power from electric power equipment have been developed and have received attention from the viewpoint of energy savings.

Furthermore, the above-mentioned electric power equipment has a configuration in which a fire-extinguishing agent is sprayed from a plurality of nozzles in abnormal conditions in order to enhance the safety in the abnormal conditions such as a crash (see, for example, Patent Document 1).

The above-mentioned conventional example has a problem that the size of the electric power equipment becomes larger.

More specifically, the electric power equipment has a configuration in which power supply elements are connected in series or in parallel in order to achieve high power. Therefore, nozzles for spraying a fire-extinguishing agent to the respective power supply elements and shutoff valves for the nozzles are used. The use of the plurality of nozzles and shutoff valves in this way causes the size of the electric power equipment to increase.

Patent Document 1: Japanese Patent Unexamined Publication No. H9-74603

### SUMMARY OF THE INVENTION

Electric power equipment of the present invention includes a main body case having an accommodation space for power supply element and a fire-extinguishing agent discharge space; and a plurality of power supply elements provided in the accommodation space for power supply element of the main body case. The fire-extinguishing agent discharge space has a fire-extinguishing agent spray space for spraying a fire-extinguishing agent to the plurality of power supply elements, and a fire-extinguishing agent supply space for supplying the fire-extinguishing agent to the fire-extinguishing agent spray space. A plurality of fire-extinguishing agent spray holes are provided in a first wall which separates the fire-extinguishing agent spray space from the accommodation space for power supply element. A plurality of fire-extinguishing agent supply holes are provided in a second wall which separates the fire-extinguishing agent spray space from the fire-extinguishing agent supply space. A fire-extinguishing agent tank is coupled to the fire-extinguishing agent supply space via a shutoff valve. Thus, the size of the electric power equipment can be reduced.

That is to say, in the present invention, the fire-extinguishing agent flowing from the fire-extinguishing agent tank into the fire-extinguishing agent discharge space via the shutoff valve is firstly supplied to the fire-extinguishing agent supply space and then spread. Next, the spread-state fire-extinguishing agent is supplied to the fire-extinguishing agent spray space from the fire-extinguishing agent supply holes in the second wall, and then sprayed toward the power supply elements from the fire-extinguishing agent spray holes provided in the first wall.

As described in the present invention, since the fire-extinguishing agent is sprayed not from a plurality of nozzles but from a plurality of fire-extinguishing agent spray holes provided in the first wall, a plurality of nozzles and shutoff valves are not required. As a result, the size of the electric power equipment can be considerably reduced.

Furthermore, the electronic device of the present invention employs the above-mentioned electric power equipment as a power source. Thus, the safety of the electronic device to be used can be enhanced.

Furthermore, power supply element inspection equipment of the present invention employs the above-mentioned electric power equipment as inspection equipment of a power supply element. Thus, the safety of the power supply element inspection equipment can be enhanced.

### BRIEF DESCRIPTION OF THE DRAWINGS

Fig. 1 is a sectional view of electric power equipment in accordance with a first exemplary embodiment of the present invention.
Fig. 2 is a sectional view of another example of electric power equipment in accordance with the first exemplary embodiment of the present invention.
Fig. 3 is a sectional view of another example of a wall of the electric power equipment in accordance with the first exemplary embodiment of the present invention.
Fig. 4 is a view showing a configuration of an electronic device in accordance with a second exemplary embodiment of the present invention.
Fig. 5 is a view showing a configuration of power supply element inspection equipment in accordance with a third exemplary embodiment of the present invention.

### REFERENCE MARKS IN THE DRAWINGS

- 1: main body case
- 2: power supply element
- 3: fire-extinguishing agent discharge space
- 4: fire-extinguishing agent spray hole
- 4A: wall
- 5: fire-extinguishing agent spray space
- 6: fire-extinguishing agent supply hole
- 6A: wall
- 7: fire-extinguishing agent supply space
- 8: shutoff valve
- 9: tire-extinguishing agent tank
- 9A: piping
- 10: abnormality detection section
- 11: abnormal state detector
- 12: controller
- 13A, 13B: axle shaft
- 14A: front wheel
- 14B: rear wheel
- 15: shaft
- 16: power transmission unit
- 17: motor
- 18: electric power supply line
- 19: electric power equipment
- 20: inspection system

### DETAILED DESCRIPTION OF THE PREFERRED EMBODIMENT

Hereinafter, exemplary embodiments of the present invention are described with reference to drawings in which the same reference numerals are given to the same components. Note here that the present invention is not limited to the embodiments mentioned below as long as it is based on the basic features described in the description.

### FIRS EXEMPLARY EMBODIMENT

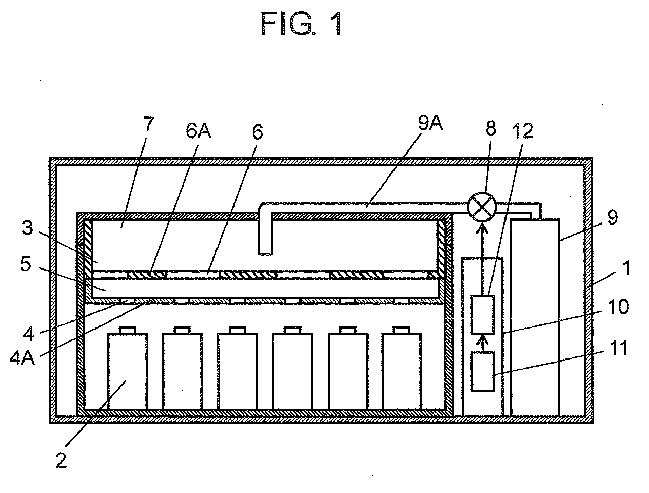

Fig. 1 is a sectional view of electric power equipment in accordance with a first exemplary embodiment of the present invention. As shown in Fig. 1, the electric power equipment includes main body case 1, power supply elements 2 accommodated in main body case 1, and fire-extinguishing agent discharge space 3 facing power supply elements 2.

Furthermore, fire-extinguishing agent discharge space 3 includes fire-extinguishing agent spray space 5 having fire-extinguishing agent spray holes 4 for spraying a fire-extinguishing agent toward power supply elements 2, and fire-extinguishing agent supply space 7 coupled to fire-extinguishing agent spray space 5 via fire-extinguishing agent supply holes 6. Fire-extinguishing agent tank 9 is coupled to fire-extinguishing agent supply space 7 through piping 9A having shutoff valve 8.

Power supply elements 2 specifically are batteries or capacitors. This exemplary embodiment describes batteries as an example of power supply elements 2.

That is to say, when power supply elements 2 are batteries, the electric power equipment is a power source with a high voltage when the batteries are connected in series and is a power source with a large capacity when the batteries are connected in parallel. Then, as described below, for example, by boosting the voltage of the electric power equipment, a motor for driving an automobile as an electronic device can be driven.

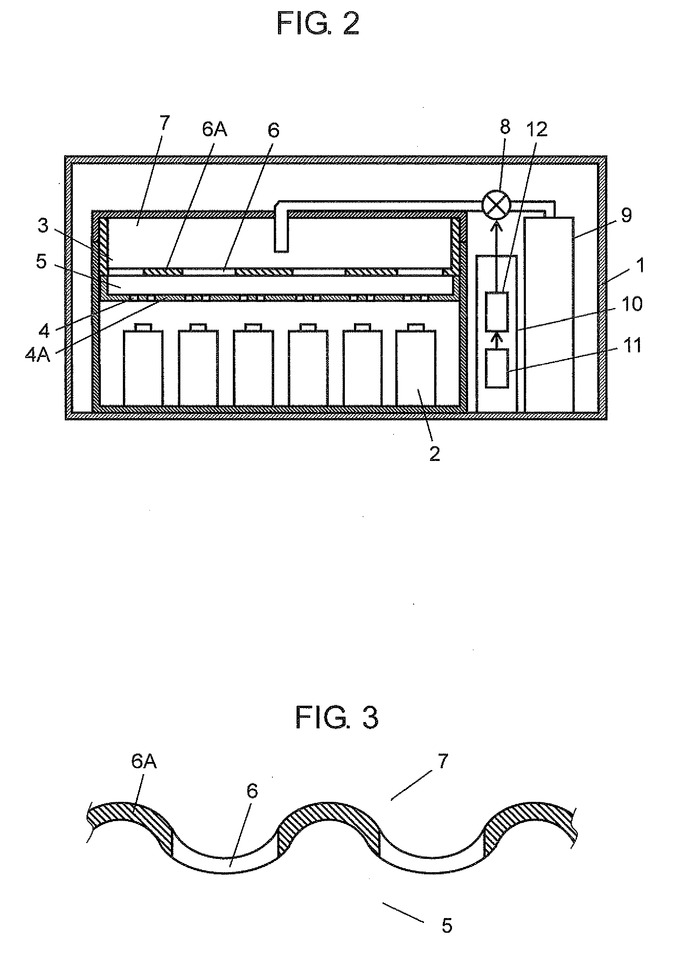

Above-mentioned fire-extinguishing agent spray space 5 and fire-extinguishing agent supply space 7 are sequentially provided above power supply elements 2. Furthermore, at least one of (preferably a plurality of) fire-extinguishing agent spray holes 4 opening toward fire-extinguishing agent spray space 5 are disposed facing the upper parts of power supply elements 2. Fig. 1 describes an example in which each of fire-extinguishing agent spray hole 4 faces one of power supply elements 2, respectively. However, as shown in a sectional view of Fig. 2 that shows another example of electric power equipment, for example, every two fire-extinguishing agent spray holes 4 may face one of power supply elements 2.

Fire-extinguishing agent supply holes 6 are formed in wall 6A made of a metal plate. Furthermore, fire-extinguishing agent spray holes 4 are formed in wall 4A made of a metal plate. The number of fire-extinguishing agent supply holes 6 formed in wall 6A is smaller than the number of fire-extinguishing agent spray holes 4 formed in wall 4A. Then, the opening area of the individual fire-extinguishing agent supply hole 6 is made to be larger than that of the individual fire-extinguishing agent spray hole 4.

Shutoff valve 8 is configured to be opened by an output of abnormality detection section 10. Inside abnormality detection section 10, abnormal state detector 11 and controller 12 thereof are provided. In a case that abnormal state detector 11 is; for example, an impact detector, controller 12 allows shutoff valve 8 to open when an abnormal impact is detected. In a case that abnormal state detector 11 is a temperature detector, controller 12 allows shutoff valve 8 to open when an abnormal temperature is detected.

When shutoff valve 8 is opened by the detection of such abnormalities, a fire-extinguishing agent is vigorously flown from fire-extinguishing agent tank 9 into fire-extinguishing agent supply space 7 through piping 9A, and it is firstly spread in fire-extinguishing agent supply space 7. Next, this spread fire-extinguishing agent is supplied from fire-extinguishing agent supply holes 6 to fire-extinguishing agent spray space 5. Thereafter, the fire-extinguishing agent is sprayed from fire-extinguishing agent spray holes 4 to power supply elements 2. Thus, safety measure for electric power equipment and an electronic device using the electric power equipment is taken.

In the above-mentioned operation, since the number of fire-extinguishing agent supply holes 6 is made to be smaller than the number of fire-extinguishing agent spray holes 4, the fire-extinguishing agent flown into fire-extinguishing agent supply space 7 through piping 9A can be supplied to fire-extinguishing agent spray space 5 via fire-extinguishing agent supply hole 6 in a state in which the fire-extinguishing agent is spread in fire-extinguishing agent supply space 7.

Furthermore, since the opening area of fire-extinguishing agent supply hole 6 is made to be larger than that of fire-extinguishing agent spray hole 4, flow passage resistance is not too much increased when a fire-extinguishing agent is supplied from fire-extinguishing agent supply space 7 to fire-extinguishing agent spray space 5.

Therefore, the fire-extinguishing agent can be smoothly sprayed from fire-extinguishing agent spray holes 4 to power supply elements 2, thus enhancing the safety.

Furthermore, in this exemplary embodiment, since fire-extinguishing agent spray space 5 and fire-extinguishing agent supply space 7 are provided sequentially above power supply elements 2, spraying of the fire-extinguishing agent from fire-extinguishing agent spray holes 4 can use the force of free drop (fall). As a result, improvement of safety measure can be expected.

Furthermore, in the exemplary embodiment, as shown in Figs. 1 and 2, since at least one fire-extinguishing agent spray hole 4 faces each of power supply elements 2, the fire-extinguishing agent can be securely sprayed to individual power supply element 2. As a result, the improvement of the safety measure can be expected. In this configuration, by providing two or more fire-extinguishing agent spray holes 4, the fire-extinguishing agent is sprayed to the entire side surface of the power supply element more uniformly, and abnormal heat-generation and the like can be suppressed for a short time.

Furthermore, in the above-mentioned embodiment, when the surface of wall 6A made of a metal plate is made to be water-repellent and the surface of wall 4A made of a metal plate is made to be hydrophilic, the fire-extinguishing agent can be sprayed more smoothly.

That is to say, when the surface of wall 6A made of a metal plate is made to be water-repellent, the fire-extinguishing agent can be supplied from wall 6A to fire-extinguishing agent spray space 5 via fire-extinguishing agent supply hole 6 by using the water-repellent property of the surface. Furthermore, the fire-extinguishing agent supplied to fire-extinguishing agent spray space 5 can be spread on wall 4A by the use of the hydrophilic property of the surface of wall 4A. Therefore, the fire-extinguishing agent can be sprayed smoothly from fire-extinguishing agent spray holes 4 to power supply elements 2. As a result, electric power equipment with high safety can be achieved.

Furthermore, walls 6A and 4A can be formed of metal plates respectively as mentioned above by following methods easily. Wall 6A is treated to have water-repellent property by mirror-finishing the surface of the metal plate, and wall 4A is treated to have hydrophilic property by roughening the surface of the metal plate. Furthermore, since walls 4A and 6A are made of metal, they have high strength, heat resistance, and high safety.

Furthermore, wall 6A in the above-mentioned exemplary embodiment is made to be concave and convex with respect to the fire-extinguishing agent supply space 7 side as shown in a sectional view of Fig. 3 showing another example of the wall of the electric power equipment, and fire-extinguishing agent supply holes 6 are provided at the concave portion. Thus, the fire-extinguishing agent spread in fire-extinguishing agent supply space 7 can be supplied smoothly to fire-extinguishing agent spray space 5 via fire-extinguishing agent supply holes 6 formed in the concave portion.

Therefore, a fire-extinguishing agent can be smoothly sprayed from fire-extinguishing agent spray holes 4 to power supply elements 2 and thus the safety becomes enhanced.

### SECOND EXEMPLARY EMBODIMENT

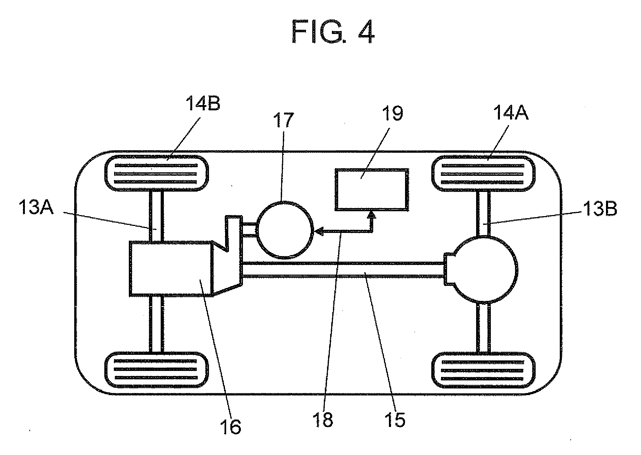

Hereinafter, an electronic device in accordance with a second exemplary embodiment of the present invention is described in detail with reference to Fig. 4.

Fig. 4 is a view showing a configuration of an electronic device in accordance with the second exemplary embodiment of the present invention. As shown in Fig. 4, the electric power equipment in accordance with the first exemplary embodiment is used as a power source of an electronic device, for example, an electric vehicle. Note here that since the configuration and effect of the electric power equipment are the same as those of the first exemplary embodiment, the description thereof is omitted herein.

As shown in Fig. 4, the electronic device of this exemplary embodiment includes at least front wheels 14A coupled to axle shaft 13A, rear wheels 14B coupled to axle shaft 13B, shaft 15 coupling front wheels 14A and rear wheels 14B, power transmission unit 16 provided on front wheels 14A or rear wheels 14B, motor 17 for driving power transmission unit 16, and electric power equipment 19 for driving the motor via electric power supply line 18.

According to this exemplary embodiment, even when the electronic device crashes and the electric power equipment incorporated in the electronic device is in an abnormal state, the fire-extinguishing agent is prayed to the power supply element thanks to an impact detector. Thus, the safety of the electronic device is secured.

Note here that this exemplary embodiment describes an electric vehicle as an example of the electronic device. However, the configuration is not necessarily limited to this example. For example, the electronic device may be a stationary fuel cell system, a solar light generating system, and the like, and the electric power equipment may be a backup power source or a battery pack for storing generated surplus electric power.

### THIRD EXEMPLARY EMBODIMENT

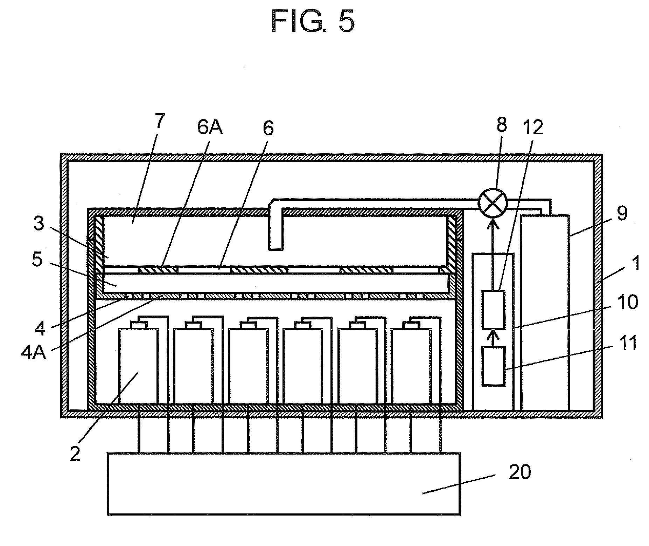

Hereinafter, power supply element inspection equipment in accordance with a third exemplary embodiment of the present invention is described with reference to Fig. 5.

Fig. 5 is a view showing a configuration of power supply element inspection equipment in accordance with the third exemplary embodiment of the present invention. As shown in Fig. 5, the electric power equipment of the first exemplary embodiment is used as an inspection device of a power supply element and the like. Note here that since the configuration and effect of the electric power equipment are the same as those in the first exemplary embodiment, the description thereof is omitted.

As shown in Fig. 5, the power supply element inspection equipment in this exemplary embodiment includes at least the electric power equipment in accordance with the first exemplary embodiment and inspection system 20 for inspecting properties of the power supply elements in the electric power equipment.

Then, inspection system 20 includes a charge and discharge evaluation system, an overcharge and overdischarge evaluation system, high temperature storage test evaluation system, or the like, when the power supply element is, for example, a lithium secondary battery.

According to this exemplary embodiment, at the time of inspection, even when abnormality occurs in power supply element 2, the abnormality is detected by a temperature detector, so that a shutoff valve is opened and a fire-extinguishing agent can be sprayed to power supply element through the piping. As a result, an influence on another power supply element inspection equipment or inspection system of the power supply element inspection equipment with abnormality can be securely prevented.

### INDUSTRIAL APPLICABILITY

An electric power equipment of the present invention, and an electronic device and power supply element inspection equipment using the electric power equipment are useful in the technical field of, for example, automobiles, emergency power equipment, and the like.

## Claims

1. An electric power equipment comprising:
a main body case including an accommodation space for power supply element and a fire-extinguishing agent discharge space; and
a plurality of power supply elements disposed in the accommodation space for power supply element of the main body case,
wherein the fire-extinguishing agent discharge space includes a fire-extinguishing agent spray space for spraying a fire-extinguishing agent toward the plurality of power supply elements, and a fire-extinguishing agent supply space for supplying the fire-extinguishing agent to the fire-extinguishing agent spray space,
a first wall separating the fire-extinguishing agent spray space from the accommodation space for power supply element is provided with a plurality of fire-extinguishing agent spray holes,
a second wall separating the fire-extinguishing agent spray space from the fire-extinguishing agent supply space is provided with a plurality of fire-extinguishing agent supply holes, and
a fire-extinguishing agent tank is coupled to the fire-extinguishing agent supply space via a shutoff valve.

2. The electric power equipment according to claim 1,
wherein the fire-extinguishing agent spray space and the fire-extinguishing agent supply space are sequentially provided from a lower part to an upper part above the plurality of power supply elements.

3. The electric power equipment according to claim 1,
wherein one or more of the fire-extinguishing agent spray holes are allowed to face each of the plurality of power supply elements.

4. The electric power equipment according to claim 1,
wherein a number of the fire-extinguishing agent supply holes is made to be smaller than a number of the fire-extinguishing agent spray holes, and an opening area of each of the fire-extinguishing agent supply holes is made to be larger than an opening area of each of the fire-extinguishing agent spray holes.

5. The electric power equipment according to claim 1,
wherein the second wall is convex and concave with respect to the fire-extinguishing agent supply space, and a concave portion is provided with the fire-extinguishing agent supply holes.

6. The electric power equipment according to claim 1,
wherein a surface of the first wall is hydrophilic and a surface of the second wall is water-repellent.

7. The electric power equipment according to claim 1,
wherein the first and second walls are formed of a metal plate, and a surface of a metal plate forming the first wall is roughened and a surface of a metal plate forming the second wall is mirror-finished.

8. The electric power equipment according to claim 1,
wherein the power supply elements are one of batteries are capacitors.

9. The electric power equipment according to claim 1,
wherein the shutoff valve is configured to be opened by an output from an abnormal state detector provided in the main body case.

10. The electric power equipment according to claim 9,
wherein the abnormal state detector includes one of a impact detector and a temperature detector.

11. An electronic device comprising the electric power equipment according to claim 1 as an electric power source.

12. A power supply element inspection equipment comprising the electric power equipment according to claim 1 as inspection equipment for a power supply element.
